# EUROPEAN PATENT SPECIFICATION

(11) **EP 0 135 361 B1**
(45) Date of publication and mention of the grant of the patent: **26.04.1995**
(21) Application number: 84305513.8
(22) Date of filing: 13.08.1984
(51) Int. Cl.: G01N 21/53, G08B 17/10

(54) **Apparatus for detecting particulate material in suspension**
Gerät zur Detektion von Partikeln in Suspension
Appareil pour la détection de particules en suspension

(30) Priority: 12.08.1983 AU 821/83
(43) Date of publication of application: 27.03.1985
(73) Proprietor: I.E.I. PTY LTD A.C.N. 053 531 212, Clayton Victoria (AU)
(72) Inventor: COLE, Martin Terence, Keysborough, Victoria (AU)
(74) Representative: Smith, Martin Stanley

(56) References cited:
- WO-A-80/01326
- CH-A- 595 851
- DE-A- 2 624 977
- DE-B- 2 751 047

## Description

The present invention relates to an apparatus for detecting particulate material in suspension incorporating a light absorber device which is effective to prevent or restrict reflection of light perpendicular to its surface over a wide range of incident angles.

The apparatus of the present invention has particular though not exclusive application in extremely sensitive optical smoke detectors incorporating at least one tubular sampling chamber including a light sensing device at one end, a light absorber at the other end, a light source projected across the tube, means for taking continuous samples of surrounding air whereby when smoke is present light impinges on the sensing device thereby creating an alarm situation. Thus, by detecting the presence of smoke it may be possible to indicate the presence of fire at a very early stage so that action can be taken prior to major damage being caused. Unfortunately, sufficiently sensitive known apparatus is subject to spurious response because of lack of, or poorly controlled sensitivity. Furthermore, such known smoke detection apparatus are rather large and heavy, and require relatively high powers to operate them.

One important aspect of smoke detector construction is to provide an air sampling tube of short length.

One factor which contributes to the overall dimension of the chamber is the provision of an effective light absorber The absorber is designed to prevent light from being reflected perpendicular to the surface of the absorber. Thus, when installed into a sampling chamber the absorber prevents light directed towards the absorber from any angle being reflected back along the sampling chamber towards the light sensing device thus no light should be reflected axially along the sampling chamber.

Devices are known utilising a blackened inclined plane to reflect light towards the blackened walls of said sampling chamber, thereby to absorb light by at least three lossy reflections before the remnant light can be returned in the direction of said detector element.

Other known absorbers, eg from CH-A-595851 and DE-A-2624977, utilise a blackened cone, concentric with said sampling chamber, and the cone in the latter specification is encircled by a groove facing towards the axis of the cone. The cone has the advantage of halving the length which would have been occupied by said inclined plane, assuming the half-apex angle of said cone equals the angle of inclination of said plane to said sampling chamber. The external length of said sampling chamber is thereby reduced.

PCT Application No WO-A-8001326 by Cerberus AG published June 26, 1980 discloses a smoke detector having a radiation source which produces a conical ring-shaped radiation pattern. A detector located along the axis of this cone is surrounded by a light absorber structure comprising concentric ring-shaped webs. The radially inner surfaces of the webs are parallel to the axis. There is no disclosure therein of a central cone, and radiation emitted by the radiation source impinges only on the inner, cylindrical surfaces of the webs.

DE-B-2751047 discloses a gas analysing apparatus in which a grooved body made from glass or other suitable material is employed to absorb infra-red radiation to prevent reflection of such radiation back into infra-red radiation receiving chambers.

The present invention is particularly adapted for use with a high intensity flash reflector as disclosed in my co-pending European Patent Application No 84305514.6 filed 13 August 1984, and a sampling chamber disclosed in my co-pending European Patent Application No 84305512.0 filed 13 August 1984.

The sampling chamber is particularly suited for use with the sampling device or point disclosed in my co-pending European Patent Application No.84304549.3 filed 3 July 1984.

The present invention has as a principal objective the provision of a detection apparatus which is effective yet simple to construct.

There is provided according to the present invention detection apparatus for detecting the presence of particulate material in suspension, e.g. smoke, in a chamber of the apparatus which apparatus comprises a light source directing light into said chamber, and a light sensing device and light absorbing means disposed at opposite sides of and directed toward said chamber, characterised in that the light source directs light transversely relative to the direction of reflected light passing from the chamber to the light sensing device and in that the light absorbing means comprises a body having a face which is light absorptive and which has a central cone and one or more annular grooves surrounding and concentric with said cone, each of said grooves having a radially inner wall and a radially outer wall each of which is inclined so as to present a truncated conical surface coaxial with the central cone, the radially outer wall further being undercut relative to the central axis of the cone so as to shade the base of the groove from direct impinging light.

Conveniently, the said face of the body is coated with a material which is highly light absorptive. The light absorbing means of the apparatus can be made to absorb lightwith greater efficiency while occupying a length at least 3 times shorter than a simple cone absorber and at least 6 times shorter than an inclined plane absorber as mentioned above.

Thus, the present invention when applied to an optical smoke detector is not only effective in minimising the external length of the chamber but is more effective, and the number of applications in which such a smoke detector can be used is increased because of its compactness.

The invention will now be described in more detail with reference to the accompanying drawings in which:-
Figure 1 shows a cross sectional view of one end part of a smoke detection apparatus embodying the invention and showing a light absorber mounted in a sampling tube of the apparatus, and
Figure 2 shows a general cross sectional view of the smoke detection apparatus.

In the illustrated embodiment of this invention, a short cylindrical body 10 is machined to produce one substantially central externally conical surface 11, preferably surrounded by two concentric truncated external conical surfaces 12, 13. Between each adjacent conical surface 11, 12, 13 there are provided two internal concentric conical surfaces 12a, 13a which are undercut. Said undercut enables each peak 14 to shade each valley or groove base 15. The radius of each valley cannot be infinitely small, and would otherwise be capable of reflecting a small amount of light axially along said sampling tube. Equally importantly, incident axial light becomes trapped within the confines of the inclined surfaces and suffers lossy reflection at least five times before emerging, extremely attenuated, in a non-axial direction. This cannot be achieved with the simple cone or inclined plane designs. In a preferred embodiment the angle of under cut is approximately 5° from the axis of the chamber, and the external cone angle is approximately 30°.

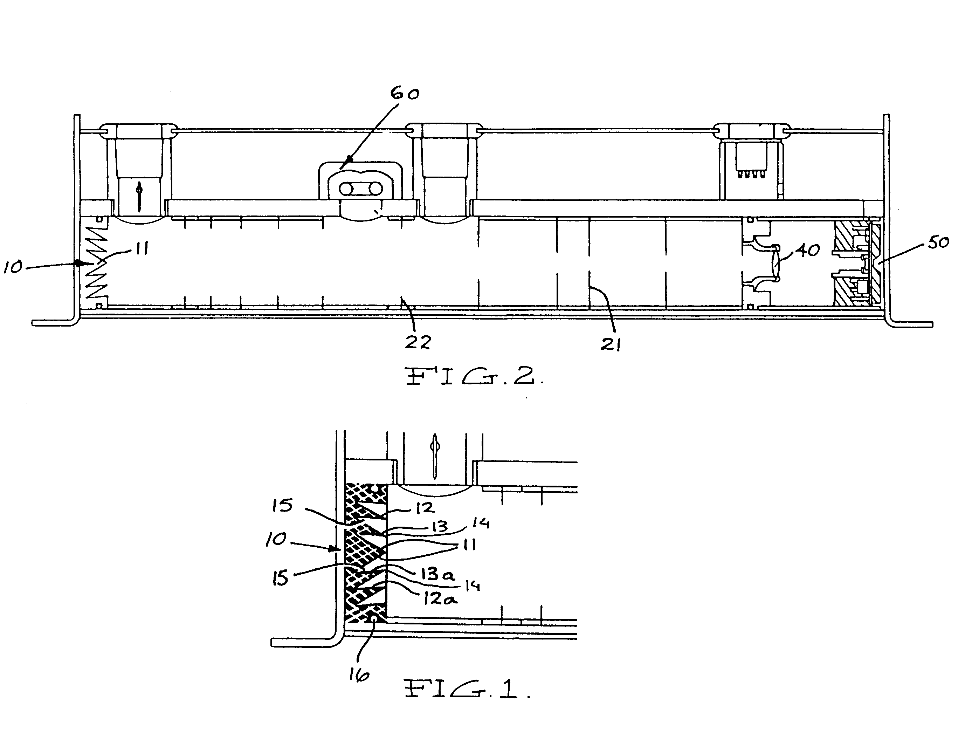

With reference to figure 2 the sampling tube includes a light source 60 with associated reflector and a lens 40 near a light sensing device 50. If the area adjacent the light source 60 fills with smoke, light impinges on the particles and is transmitted axially along the tube past light baffles 21 to lens 40 and will impinge upon the light sensor 50. Light baffles 21 and 22 are spaced along the tube to catch stray light impinging at various incident angles. The absorber 10 with its central cone is positioned on the longitudinal axis aligned with the central axis of the lens and the light sensor. Thus, any light which is directed to the back of the sampling chamber will not be reflected back along the sampling chamber toward the sensor 50. Therefore negligible light is reflected axially along the sampling chamber.

The absorber is sealingly mounted in the end of the sampling chamber as a press fit. Sealing of the absorber into the chamber is assured by the provision of O-ring seals 16. This facilitates removal of the absorber to allow access to the sampling chamber for servicing purposes while providing a sealing facility for the chamber where it is required to be operated at other than atmospheric pressure.

## Claims

1. Detection apparatus for detecting the presence of particulate material in suspension, e.g. smoke, in a chamber of the apparatus which apparatus comprises a light source (60) directing light into said chamber, and a light sensing device (50) and light absorbing means disposed at opposite sides of and directed toward said chamber, characterised in that the light source (60) directs light transversely relative to the direction of reflected light passing from the chamber to the light sensing device and in that the light absorbing means comprises a body (10) having a face which is light absorptive and which has a central cone and one or more annular grooves surrounding and concentric with said cone, each of said grooves having a radially inner wall (11,12,13) and a radially outer wall (12a,13a) each of which is inclined so as to present a truncated conical surface coaxial with the central cone, the radially outer wall (12a, 13a) further being undercut relative to the central axis of the cone so as to shade the base (15) of the groove from direct impinging light.

2. Detection apparatus as claimed in claim 1 characterised in that said truncated conical surface presented by a said radially internal wall (12,13) is substantially parallel to the surface of said cone (11).

3. Detection apparatus as claimed in claim 1 or claim 2 characterised in that the radially outer wall (12a,13a) of each groove is undercut at an angle of substantially 5° relative to the central axis of the cone.

4. Detection apparatus as claimed in any one of the preceding claims characterised in that each said groove has its radially inner wall (12,13) inclined at an angle of substantially 60° to said face.

5. Detection apparatus as claimed in any one of the preceding claims characterised in that said face is light absorptive by reason of a light absorptive coating thereon.

6. Detection apparatus as claimed in any one of the preceding claims characterised in that said body (10) is sealingly mounted in one end of a tubular member, the light sensing device (50) being mounted at the other end of the tubular member, the chamber being provided in the member between the body (10) and the light sensing device, and the light source being arranged to direct light radially into the chamber.

## Patentansprüche

1. Detektionsgerät zur Detektion der Anwesenheit von speziellem Material in Suspension, z.B. Rauch, in einer Kammer des Gerätes, welches Gerät beinhaltet, eine Lichtquelle (60) welche Licht in die Kammer richtet, ein lichtempfindliches Bauteil (50) und lichtabsorbierendes Mittel, vorgesehen an entgegengesetzten Seiten und ausgerichtet auf die Kammer, dadurch gekennzeichnet, daß die Lichtquelle (60) das Licht in Querrichtung relativ zum reflektierten Licht, welches von der Kammer zum lichtempfindlichen Bauteil verläuft, ausstrahlt, wobei das lichtabsorbierende Mittel einen Körper (10) aufweist, der eine lichtabsorbierende Stirnseite mit einem zentralen Kegel aufweist, und eine oder mehrere ringförmige Vertiefungen, die den Kegel konzentrisch umschließen, wobei jede der Vertiefungen eine radiale innere Wand (11,12,13) und eine radiale äußere Wand (12a,13a) aufweist, welche jeweils derart geneigt ist daß sie eine abgestumpfte kegelartige Oberfläche darstellt, wobei die radiale äußere Wand (12a,13a) in Bezug auf die zentrale Achse des Kegels unterhöhlt ist, um den Boden (15) der Vertiefung von direkt einfallendem Licht abzuschatten.

2. Detektionsgerät nach Anspruch 1, dadurch gekennzeichnet, daß die abgestumpfte kegelartige Oberfläche, dargestellt durch eine solche radiale innere Wand (12,13), im wesentlichen parallel zur Oberfläche des Kegels (11) ist.

3. Detektionsgerät nach Anspruch 1 oder 2, dadurch gekennzeichnet, daß die radiale äußere Wand (12a, 13a) jeder Vertiefung in einem Winkel von im wesentlichen 5° relativ zur zentralen Achse des Kegels unterhöhlt ist.

4. Detektionsgerät nach einem der vorhergehenden Ansprüche, dadurch gekennzeichnet, daß jede der Vertiefungen ihre radiale innere Wand (12,13) in einem Winkel von etwa 60° bezüglich der Fläche geneigt hat.

5. Detektionsgerät nach einem der vorhergehenden Ansprüche, dadurch gekennzeichnet, daß die Stirnseite lichtabsorbierend durch eine darauf befindlichen lichtabsorbierende Schicht ist.

6. Detektionsgerät nach einem der vorhergehenden Ansprüche, dadurch gekennzeichnet, daß der Körper (10) abdichtend in einem Ende eines röhrenförmigen Teils angebracht ist, das lichtempfindliche Bauteil (50) am anderen Ende des röhrenförmigen Teils angebracht ist, wobei die Kammer sich in dem Teil zwischen dem Körper (10) und dem lichtempfindlichen Bauteil befindet, und die Lichtquelle so angebracht ist, daß sie das Licht radial in die Kammer richtet.

## Revendications

1. Appareil de détection pour détecter la présence de particules de matériau en suspension, par exemple, de la fumée, dans une chambre de l'appareil, lequel appareil comprend une source lumineuse (60) envoyant de la lumière dans cette chambre, un dispositif détecteur de lumière (50) et des moyens absorbant la lumière, placés sur les faces opposées de, et orientés vers, ladite chambre, caractérisé en ce que la source lumineuse (60) envoie la lumière perpendiculairement à la direction de la lumière réfléchie, de la chambre vers le dispositif détecteur de lumière et en ce que les moyens absorbant la lumière sont constitués par un élément (10) ayant une face qui absorbe la lumière et comporte un cône central ainsi qu'une ou plusieurs rainures annulaires entourant ledit cône et concentriques avec lui, chacune desdites rainures ayant une paroi radialement intérieure (11, 12, 13) et une paroi radialement extérieure (12a, 13a) dont chacune est inclinée de façon à présenter une surface tronconique coaxiale avec le cône central, la paroi radialement extérieure (12a, 13a) étant encore en contre-dépouille par rapport à l'axe central du cône de manière à masquer la base (15) de la rainure par rapport à la lumière incidente.

2. Appareil de détection selon la revendication 1, caractérisé en ce que ladite surface tronconique présentée par ladite paroi radialement intérieure (12, 13) est sensiblement parallèle à la surface dudit cône (11).

3. Appareil de détection selon l'une des revendications 1 et 2, caractérisé en ce que la paroi radialement extérieure (12a, 13a) de chaque rainure est en contre-dépouille et fait un angle de sensiblement 5° par rapport à l'axe central du cône.

4. Appareil de détection selon l'une quelconque des revendications précédentes, caractérisé en ce que chacune desdites rainures a sa paroi radialement intérieure (12, 13) inclinée sous un angle de sensiblement 60° par rapport à ladite face.

5. Appareil de détection selon une quelconque des revendications précédentes, caractérisé en ce que ladite face absorbe la lumière grâce à un revêtement absorbant dont elle est recouverte.

6. Appareil de détection selon une quelconque des revendications précédentes, caractérisé en ce que ledit élément (10) est fixé de manière étanche dans une extrémité d'une pièce tubulaire, le dispositif détecteur de lumière (50) étant monté à l'autre extrémité de la pièce tubulaire, la chambre étant formée dans la pièce entre l'élément (10) et le dispositif détecteur de lumière, et en ce que la source lumineuse est placée de façon à envoyer la lumière radialement dans la chambre.
